# EUROPEAN PATENT APPLICATION

(11) **EP 4 502 968 A1**
(43) Date of publication of application: **05.02.2025**
(21) Application number: 23816189.7
(22) Date of filing: 08.02.2023
(51) Int. Cl.: G06V 40/13, G02B 3/00, G02B 6/00

(54) **METHOD FOR OBTAINING FINGERPRINT BY USING DISPLAY AND OPTICAL SENSOR, AND ELECTRONIC DEVICE THEREFOR**

(30) Priority: 31.05.2022 KR 20220066981; 22.07.2022 KR 20220090862
(71) Applicant: Samsung Electronics Co., Ltd., Suwon-si, Gyeonggi-do 16677 (KR)
(72) Inventor: KIM, Jinho, Suwon-si, Gyeonggi-do 16677 (KR)
(74) Representative: Gulde & Partner
(86) International application number: PCT/KR2023/001800
(87) International publication number: WO 2023/234517

(57) **Abstract**

This electronic device may comprise: a display; a window for covering the display; a photodiode arranged under a light-emitting area designated to emit light so as to detect a fingerprint on the display; a processor configured to allow light-emitting elements within the light-emitting area to sequentially emit light, and obtain a fingerprint image on the basis of optical information corresponding to each of the light-emitting elements, the optical information being collected through the photodiode, and location information of each of the light-emitting elements; and a structure which is arranged between the window and the display and induces light emitted from the light-emitting area to have straightness.

## Description

### [Technical Field]

The present disclosure relates to a method of obtaining fingerprint information using a display and an optical sensor disposed under the display, and to an electronic device therefor.

### [Background Art]

An electronic device may obtain a fingerprint by optically scanning a fingertip in contact with a cover of the electronic device. For example, the electronic device may include a light-receiving sensor disposed under or within an area designated to emit light to detect a fingerprint on a display (hereinafter, a light-emitting area) and a window covering the display. The electronic device may allow light to emit from pixels in the light-emitting area and obtain fingerprint information using optical information reflected from a fingertip adjacent to the light-emitting area and collected through the light-receiving sensor. The electronic device may, on the basis of the fingerprint information obtained, perform user authentication for online transactions (commerce or financial transactions), identity verification, screen unlocking, or the like.

### [Disclosure of Invention]

### [Technical Problem]

An electronic device may obtain fingerprint information (e.g., a fingerprint image) using a lens-based method or a lensless sequential scanning method. In the lens-based method, the light-receiving sensor may include an image sensor arranged in two dimensions and disposed under a light-emitting area and a lens disposed between the light-emitting area and the image sensor. The electronic device may turn on pixels in the light-emitting area simultaneously to emit light. Light may be at least partially reflected from a fingerprint adjacent to the light-emitting area, and the reflected light may be focused onto the image sensor through the lens. The electronic device may obtain fingerprint information using optical information collected through the image sensor.

In the sequential scanning method, a light-receiving sensor may include at least one photodiode disposed under the light-emitting area. The electronic device may turn on the pixels in the light-emitting area sequentially to allow the pixels to emit light one at a time. The electronic device may obtain fingerprint information using optical information received through the photodiode and location information of a light-emitting element (e.g., one pixel).

The electronic device with the lens-based method applied may be thicker because of the thickness and focal length of the lens. The electronic device with the sequential scanning method applied may be relatively thin because there is no lens. In addition, the sequential scanning method may be implemented at a relatively low cost because no lens is required and the photodiode is relatively cheaper than an image sensor with a two-dimensional pixel array (e.g., CMOS image sensor (CIS), and thin film transistor (TFT)-based image sensor).

A display may be implemented as a wide viewing angle panel (e.g., organic light-emitting diode (OLED), liquid crystal display (LCD), and micro LED) configured to allow a screen to be viewed from a wide left-to-right angle. For example, the light from the pixel of the corresponding panel has the property of spreading. Therefore, when light is emitted from a pixel, the light on the window surface that a fingertip is in contact with has a larger area of irradiation than the light emitted from the pixel. In the sequential scanning method, a size of light on the window surface (aka, a point spread function (PSF) size) is a characteristic value that is related to the resolving power of a fingerprint image. For example, when a line width is narrow in a fingerprint, the resolving power may be limited by the PSF size. Due to the limited resolving power, an image may be restored in such a way that the high-resolution part of the information in an original sample is lost during the restoration process. Degraded resolving power may cause problems with false acceptance and false rejection occurring during user authentication.

In various embodiments, the electronic device may be configured such that the sequential scanning method is applied, but when the display is operated in fingerprint recognition mode (or, a user authentication mode), the PSF size is adjusted to be narrower than when the display is operated in normal mode (or wide viewing angle mode), thereby minimizing the loss of fingerprint information and increasing the reliability of user authentication using fingerprint information.

Technical problems to be solved by the present disclosure are not limited to the above-mentioned technical problems, and other technical problems, which are not mentioned above, may be clearly understood from the following descriptions by those skilled in the art to which the present invention pertains.

### [Solution to Problem]

According to an embodiment, an electronic device may include a display, a window covering the display, a photodiode disposed under a light-emitting area designated to emit light to detect a fingerprint on the display, a processor, and a structure that is arranged between the window and the display and induce light emitted from the light-emitting area to have straightness. The processor may be configured to control the display to allow light-emitting elements in the light-emitting area to emit light sequentially. The processor may be configured to obtain a fingerprint image on the basis of optical information corresponding to each of the light-emitting elements collected through the photodiode and location information of each of the light-emitting elements.

According to an embodiment, a method of operating an electronic device may include changing an operating mode of a display provided in the electronic device from a first mode for a wide viewing angle to a second mode for fingerprint recognition in response to the occurrence of an event requiring user authentication using a fingerprint, controlling the display such that light-emitting elements in a light-emitting area designated for fingerprint detection in the display sequentially emit light, and generating a raw image using optical information corresponding to each light-emitting element received from a photodiode provided in the electronic device and location information of each light-emitting element, and processing the raw image to generate a first fingerprint image. The electronic device may be provided with a structure that is configured to be disposed between a window of the electronic device and the display and to change a PSF size in response to an electrical signal, in which the PSF size means a size of light on a surface of the window when one of the light-emitting elements emits light, and in which the PSF size may have a first size when the display is operated in the first mode. The changing of the operating mode from the first mode to the second mode may include controlling the structure such that the PSF size has a second size that is smaller than the first size.

According to an embodiment, a method of operating an electronic device may include changing an operating mode of a display provided in the electronic device from a first mode for a wide viewing angle to a second mode for fingerprint recognition in response to the occurrence of an event requiring user authentication using a fingerprint, controlling the display such that light-emitting elements in a light-emitting area designated in the display sequentially emit light, and generating a raw image using optical information corresponding to each light-emitting element received from a photodiode provided in the electronic device and location information of each light-emitting element, and processing the raw image to generate a first fingerprint image. The light-emitting elements may be divided into a first group and a second group, and the electronic device may be provided with a structure including constituent elements disposed between a window of the electronic device and the display and inducing light emitted from the second group to have straightness. The changing of the operating mode from the first mode to the second mode may include deactivating the first group and activating the second group.

### [Advantageous Effects of Invention]

According to various embodiments, an electronic device may minimize the loss of fingerprint information and increase the reliability of user authentication using the fingerprint information. In addition, various effects that can be directly or indirectly identified through the present document may be provided.

### [Brief Description of Drawings]

Fig. 1 is a block diagram illustrating an electronic device in a network environment according to various embodiments.
Fig. 2 is a block diagram illustrating the display module according to various embodiments.
FIG. 3A is a view illustrating a bar-type housing structure of an electronic device, according to an embodiment.
FIG. 3B is a view illustrating a location of a light-emitting area for obtaining fingerprint information on the display in FIG. 3A.
FIG. 4 is a view for describing a method of obtaining optical information using a sequential scanning method, according to an embodiment.
FIGS. 5 and 6 are views for describing a method of generating a fingerprint image on the basis of the optical information obtained using the sequential scanning method, according to an embodiment.
FIGS. 7A and 7B are views for describing an embodiment of implementing a normal mode and a fingerprint recognition mode using a spatial light modulator (SLM) in the electronic device.
FIGS. 8A and 8B are views for describing an embodiment of implementing a normal mode and a fingerprint recognition mode using a liquid lens in the electronic device.
FIGS. 9A, 9B, 9C, 9D, 9E, and 9F are views for describing an embodiment of implementing a normal mode and a fingerprint recognition mode using a structure for changing a display mode in the electronic device.
FIGS. 10A and 10B are views for describing an embodiment of implementing a normal mode and a fingerprint recognition mode in the electronic device on the basis of a refresh direction.
FIG. 11 is a block diagram of the electronic device, according to an embodiment.
FIG. 12 is a flowchart for describing a method of authenticating a user using a fingerprint on the electronic device, according to an embodiment.

### [Mode for the Invention]

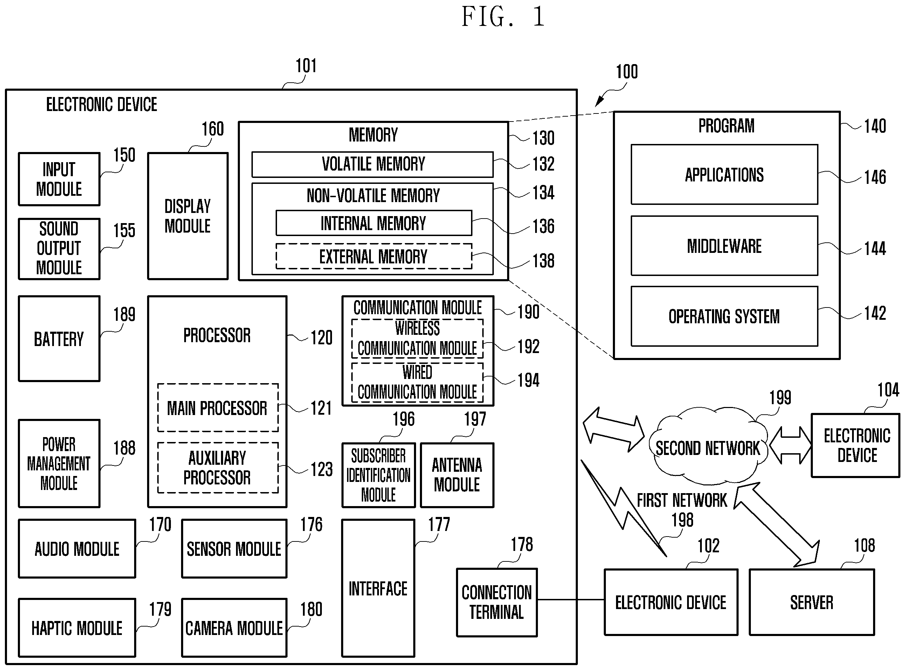

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

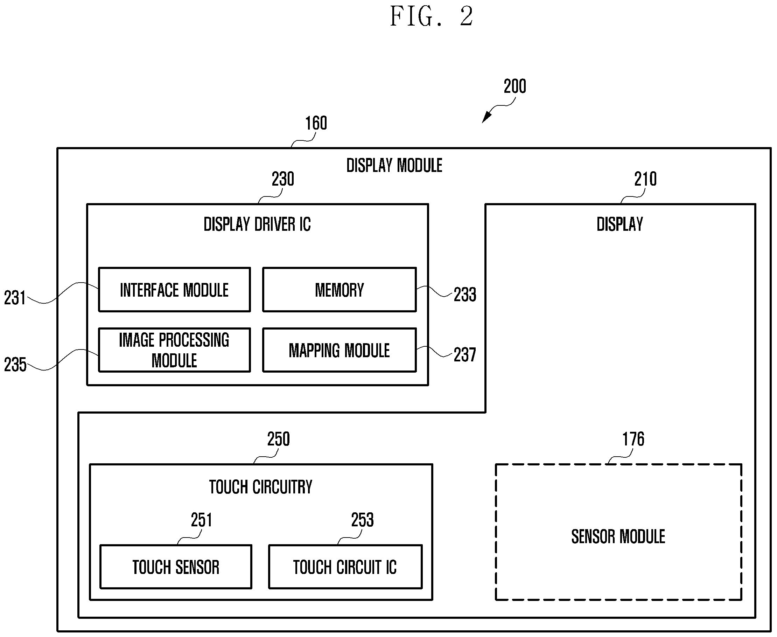

Fig. 2 is a block diagram 200 illustrating the display module 160 according to various embodiments. Referring to Fig. 2, the display module 160 may include a display 210 and a display driver integrated circuit (DDI) 230 to control the display 210. The DDI 230 may include an interface module 231, memory 233 (e.g., buffer memory), an image processing module 235, or a mapping module 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 250 or the sensor module 176 via the interface module 231. The DDI 230 may also store at least part of the received image information in the memory 233, for example, on a frame by frame basis. The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210. The mapping module 237 may generate a voltage value or a current value corresponding to the image data preprocessed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display module 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 250)) of the display module 160. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display module 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

Hereinafter, for convenience of description, a surface on which a display is visually exposed to a user may be referred to as a front surface of the electronic device 101. Further, an opposite surface of the front surface may be referred to as a rear surface of the electronic device 101. In addition, a surface, which surrounds a space between the front surface and the rear surface, may be referred to as a side surface of the electronic device 101. The term "state" may refer to a structural form, posture, shape, or geometry of the electronic device 101 (or a display, a slider, or a housing constituting the electronic device 101).

Various housing structures may be applied to the electronic device 101. For example, the electronic device 101 may have a bar-type housing structure. The bar-type housing structure may include a plate (or, cover) that forms a front surface of the electronic device 101, a plate that forms a rear surface of the electronic device 101, and a bezel structure that forms a side surface surrounding the front surface and the rear surface. a display may be disposed on the front surface. As another example, the electronic device 101 may have a foldable housing structure that is bisected into two housings about a folding axis. A first display area of the display (e.g., a flexible display) may be disposed in a first housing, and a second display area of the display may be disposed in a second housing. The foldable housing structure may be implemented in an in-folding method, in which the first display area and the second display area face each other when the electronic device 101 is in a folded state. Alternatively, the foldable housing structure may be implemented in an out folding method, in which the first display area and the second display area face opposite each other when the electronic device 101 is in a folded state. As another example, the electronic device 101 may have a slidable (or rollable) housing structure. For example, the electronic device 101 may include a slidable housing that includes a housing (or, first housing) and a slider (or, second housing), a roller that allows the slider to be retracted into the housing and allows the slider to be withdrawn from the housing, and a flexible display. The display may be disposed within a space formed by the slidable housing structure. The display may include a first display area disposed adjacent to the first housing and a second display area that surrounds the roller and is disposed in the inner space of the first housing. In the electronic device having a foldable housing structure or a slidable housing structure, a surface to which the flexible display is visually exposed may be defined as a front surface. Further, a surface opposite to the front surface may be defined as a rear surface of the electronic device. In addition, a surface that surrounds a space between the front surface and the rear surface may be defined as a side surface of the electronic device.

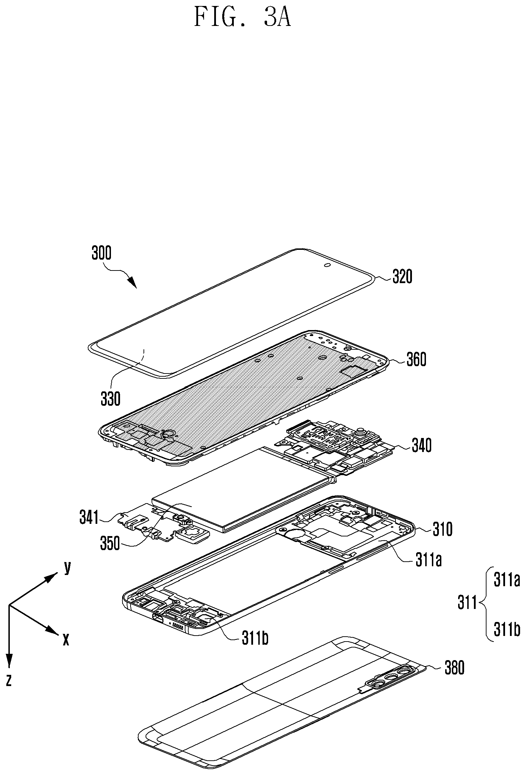

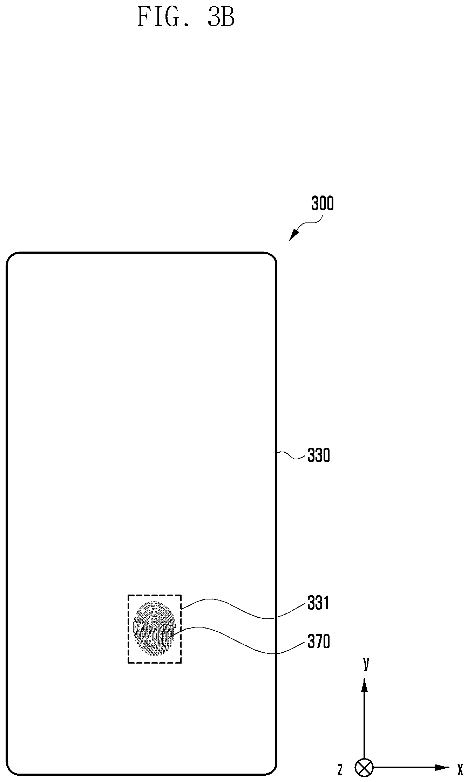

FIG. 3A is a view illustrating a bar-type housing structure of an electronic device 300 (e.g., the electronic device 101 in FIG. 1), according to an embodiment, and FIG. 3B is a view illustrating a location of a light-emitting area 331 for obtaining fingerprint information on a display 330 in FIG. 3A.

With reference to FIG. 3A, the electronic device 300 (e.g., the electronic device 101 in FIG. 1) may include, a side surface bezel structure (or side surface frame) 310, a first support member (or first support frame) 311, a front surface cover (or window) 320, a display 330 (e.g., the display module 160 in FIGS. 1 and 2), at least one printed circuit board 340 and 341, a battery 350 (e.g., the battery 189 in FIG. 1), a second support member (or second support frame) 360, and a rear surface cover 380. The front surface cover 320 may form a first surface (or front surface) of the electronic device 300 that faces in a first direction, and the rear surface cover 380 may form a second surface (or rear surface) of the electronic device 300 that faces in a second direction that is opposite to the first direction. The side surface bezel structure 310 may be made of a combination of a metal (e.g., SUS) and a polymer. The side surface bezel structure 310 may form a side surface that surrounds a space between the first surface and the second surface. According to an embodiment, a structure including the first surface, the second surface, and the side surface may be referred to as a housing (or housing structure). In some embodiments, at least one of the constituent elements of the electronic device 300 (e.g., the first support member 311, or the second support member 360) may be omitted, or other constituent elements may be additionally included in the electronic device 300.

The printed circuit boards 340 and 341 may be disposed to be supported by the first support member 311 and/or the second support member 360. The first support member 311 may be coupled to the side surface bezel structure 310. The first support member 311 may include a structure (e.g., metal, polymer) extending from the side surface bezel structure 310. The first support member 311 may be formed of, for example, a metallic and/or non-metallic material (e.g., a polymer). The display 330 may be coupled to one surface of the second support member 360 and the printed circuit boards 340 and 341 may be coupled to the other surface. The printed circuit boards 340 and 341 may be equipped with the processor 120, the memory 130, and/or the interface 177. According to an embodiment, the printed circuit boards 340 and 341 may include a main board 340 and a sub-board 341. The first support member 311 may include a main board support member 311a that supports the main board 340 and a sub-board support member 311b that supports the sub-board 341. For example, the processor 120 may include one or more of a central processing unit, an application processor, a graphic processing device, an image signal processor, a sensor hub processor, and a communication processor. For example, the memory 130 may include a volatile memory or a non-volatile memory.

The battery 350 may be disposed to be supported by the first support member 311 and/or the second support member 360. The battery 350 is a device for powering at least one constituent element of the electronic device 300 and may include, for example, a non-rechargeable primary cell, a rechargeable secondary cell, or a fuel cell. At least a portion of the battery 350 may be disposed in substantially the same plane as, for example, the printed circuit boards 340 and 341.

With reference to FIG. 3B, a partial area of the display 330 may be designated as the light-emitting area 331 that emits light to detect a fingerprint. One photodiode (not illustrated) as a light-receiving sensor may be located under (in the z-axis direction when viewed in FIGS. 3A and 3B) or within the light-emitting area 331. The light-emitting area 331 is not limited to the location illustrated in FIG. 3B and may be designated at various places on the display 330 with respect to the location of the photodiode.

With reference to FIG. 3B, a controller (e.g., the processor 120 in FIG. 1) may display a UI element 370 having a fingerprint shape, for example, on the light-emitting area 331 of the display 330 to guide a fingerprint input. The controller may recognize, through a touch sensor, that an object has touched a portion of the window located above the light-emitting area 331. The controller may control the pixels in the light-emitting area 331 in a sequential scanning method for obtaining a fingerprint on the basis of the object contact being recognized. The light generated from the pixels (e.g., light-emitting diodes) in the light-emitting area 331 may be reflected by an object (e.g., fingerprint) adjacent to the light-emitting area 331 and directed to a photodiode, and the photodiode may generate an electrical signal (e.g., current) in response to the light. An analog to digital converter (ADC) (not illustrated) may convert the electrical signal generated by the photodiode to a digital signal and transmit the digital signal to the processor 120. For example, the digital signal may be stored in a buffer before being transmitted to the controller. The digital signals may be transmitted to the controller through the buffer in a first in first out (FIFO) method, where data that enters the buffer first is output first. For example, when the light intensity is strong, data with large values may be output from the ADC to the controller through the buffer. When the light intensity is relatively weak, data with small values may be output from the ADC to the controller through the buffer.

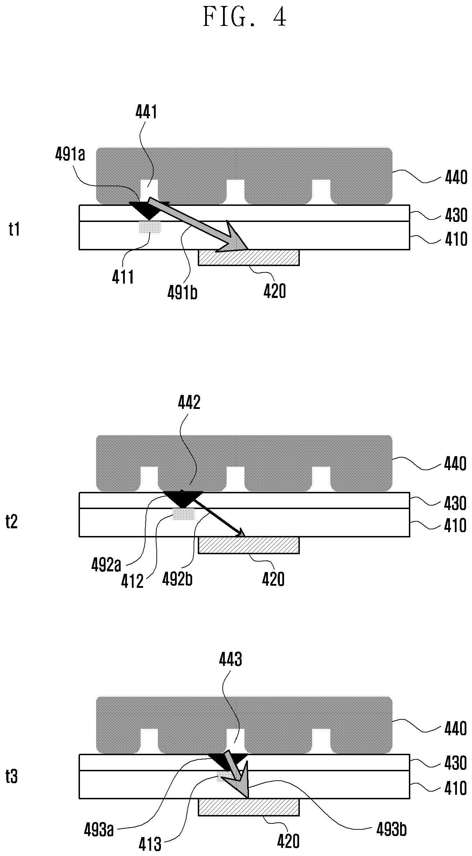

FIG. 4 is a view for describing a method of obtaining optical information using a sequential scanning method, according to an embodiment.

With reference to FIG. 4, a photodiode (e.g., organic photodiode, silicon photodiode, InGaAs photodiode, and GaAs photodiode) 420 may be located under the light-emitting area 410 in a display (e.g., the display 330 in FIGS. 3A and 3B). A fingertip 440 may be in contact with a portion 430 of the window (e.g., the front surface cover 320 in FIG. 3A) that is aligned with the light-emitting area 410. The controller (e.g., the processor 120 in FIG. 1) may control the display to allow a first light-emitting element 411 to emit light at occasion t1. Light 491a emitted from the first light-emitting element 411 is reflected at least partially from a first portion 441 of the fingertip 440 and directed to the photodiode 420, and the photodiode 420 may pass to the controller first optical information corresponding at least partially to this reflected light 491b (e.g., a voltage value corresponding to a ratio of the amount of light input to the photodiode 420 to the amount of light output from the pixel (e.g., reflectance)). For example, the reflected light 491b may be converted to a current signal by the photodiode 420 and converted to a voltage signal by an analog front end (AFE) circuit. The value representing the voltage signal may be stored in a register (e.g., the volatile memory 132 in FIG. 1). The first optical information stored in the register (e.g., voltage value) may be passed to the controller. The first portion 441 may be a portion of a valley indented between ridges.

With reference to FIG. 4, the controller may control the display to allow the second light-emitting element 412 to emit light at occasion t2. Light 492a emitted from the second light-emitting element 412 is reflected at least partially from a second portion 442 of the fingertip 440 and directed to the photodiode 420, and the photodiode 420 may pass to the controller second optical information corresponding at least partially to this reflected light 492b. The second portion 442 may be a portion of the ridge, a bifurcation where the ridge splits into two or more pieces, or an ending where the ridge ends. The controller may control the display to allow a third light-emitting element 413 to emit light at occasion t3. Light 493a emitted from the third light-emitting element 413 is reflected at least partially from a third portion 443 of the fingertip 440 and directed to the photodiode 420, and the photodiode 420 may pass to the controller third optical information corresponding at least partially to this reflected light 493b. The third portion 443 may be a portion of a valley indented between ridges.

As described above, the controller may control the light-emitting elements in the light-emitting area 410 to emit light sequentially, thereby obtaining optical information corresponding to each light-emitting element. After the sequential scanning of the light-emitting elements in the light-emitting area 410 has been completed, the controller may generate fingerprint information (e.g., a fingerprint image) corresponding to the fingertip 440 using the plurality of optical information received from the photodiode through the register and location information (e.g., xy coordinates) of the light-emitting elements corresponding thereto.

A unit of the light-emitting element (light emitting source) (or an illumination pattern) that emits light one at a time under the control of the controller may be one pixel comprising multiple sub-pixels. For example, an RGB pixel configured by a combination of R (red) sub-pixel, G (green) sub-pixel, and B (blue) sub-pixel may constitute a unit of light-emitting element. In addition to the RGB pixel, a pixel configured by a combination of RGBG, a pixel configured by a combination of RGBW (white), and the like may constitute a unit of light-emitting element. The pixels may be arranged in the display in a stripe structure, a pentile structure, a diamond structure, a diamond pentile structure, or the like. Two or more neighboring pixels may constitute a unit of light-emitting element. Each sub-pixel may include a light-emitting diode (e.g., OLED) and a drive circuit (e.g., thin-film transistor, capacitor) for driving the light-emitting diode. The drive circuit may be electrically connected to one of gate lines and one of data lines in the display. The drive circuit may charge the capacitor with a data voltage supplied from a data driver (e.g., DDI 230) through the connected data line in response to a scan signal received from a gate driver (e.g., DDI 230) through the connected gate line. The drive circuit may control the amount of current supplied to the connected light-emitting diode, depending on the data voltage charged to the capacitor. For example, the sub-pixel may display visual information at least on the basis of a scan signal and a data signal.

The location of the photodiode 420 is not limited to FIG. 4. Unlike being illustrated in FIG. 4, the photodiode 420 may be located inside the light-emitting area 410. In an example, the photodiode 420 may not overlap the pixels in the light-emitting area 410, but may be disposed substantially on the same line as the pixels. As another example, the photodiode 420 may be located on top of the light-emitting area 410. The photodiode 420 may be present in a location that does not infringe on a display light emitting path, or may be implemented in a transparent material and disposed on top of the pixels to increase the light receiving efficiency for the reflected light.

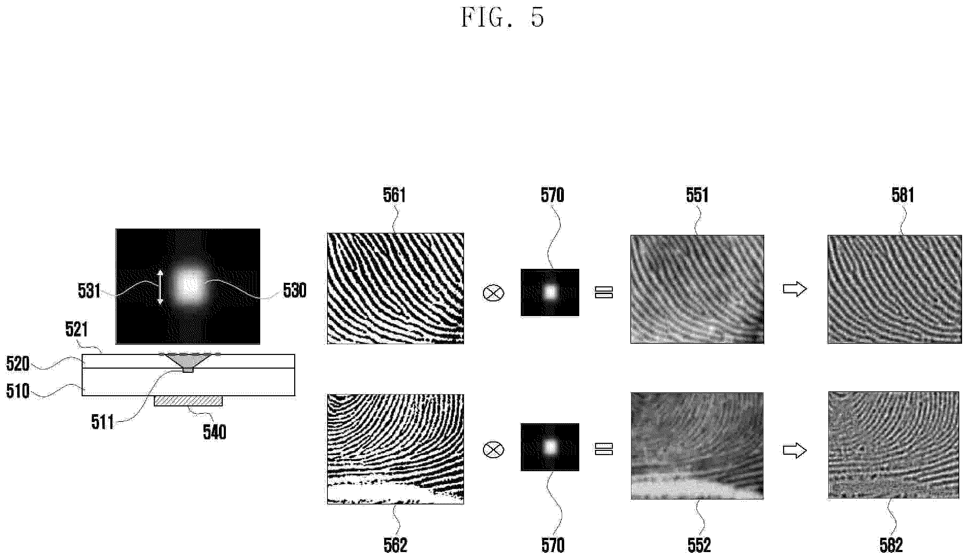

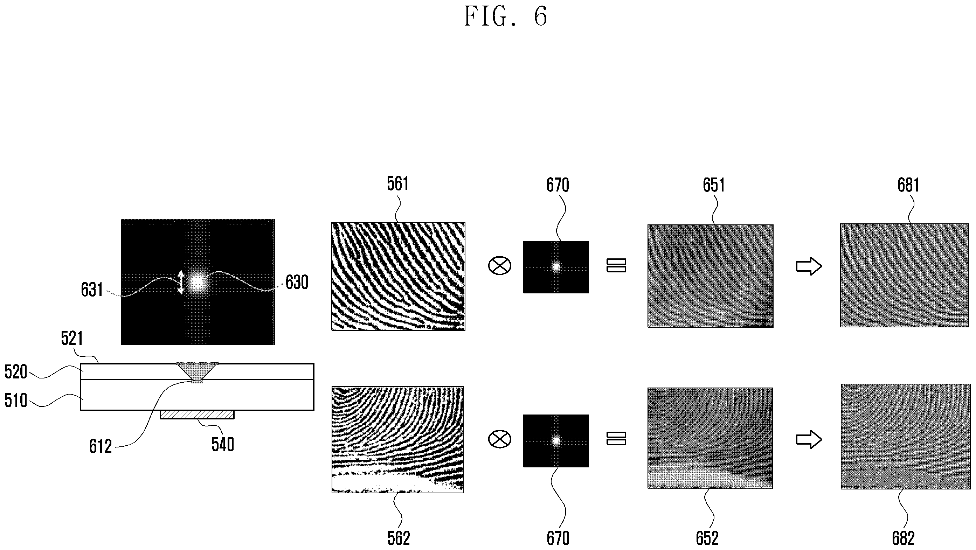

FIGS. 5 and 6 are views for describing a method of generating a fingerprint image on the basis of the optical information obtained using the sequential scanning method, according to an embodiment.

With reference to FIG. 5, the light emitted from pixels (e.g., OLED pixels) in a display (e.g., the display 330 in FIGS. 3A and 3B) may have a spreading characteristic. With this characteristic, a size of light 530 at a place where an object (e.g., a fingertip) is located (e.g., a surface 521 of a window 520) is larger than a size of a first light-emitting element 511. The size of light at a place where the object is located may depend on an interval between the light-emitting element and the object. For example, when a separate cover (e.g., protective glass) is attached to the window 520, the size of light at a place where an object is located will be greater in proportion to a thickness of the cover. As the window 520 is thicker, the size of light at a place where an object is located will be greater.

As used in the present document below, a width or a diameter may be a measure that defines a size. The size and shape of light at a place where an object is located may be defined mathematically as a point spread function (PSF). When one light-emitting element emits light, the size of light at a place where an object is located may be referred to as a "PSF size".

With reference to FIG. 5, the controller (e.g., the processor 120 in FIG. 1) may recognize that an object has been in contact with a window surface 521 located above the light-emitting area 510 through a touch sensor (e.g., the touch sensor 251 in FIG. 2). On the basis of an object contact being recognized, the controller may control the display such that the light-emitting elements (e.g., the first light-emitting element 511) in the light-emitting area 510 emit light sequentially and receive optical information corresponding to each light-emitting element from a photodiode 540 through the register. The controller may obtain a raw image by reconstructing the plurality of optical information (e.g., reflectance) into one image using location information corresponding to each of the plurality of optical information. In FIG. 5, reference numeral 551 is a first raw image corresponding to a first fingertip 561 having a wide width between ridges, and reference numeral 552 is a second raw image corresponding to a second fingertip 562 having a relatively narrow width between ridges. Reference numeral 570 is a first PSF 570 having a first PSF size 531. An image obtained through the convolution of the first PSF 570 with an actual image that substantially matches the first fingertip 561 may substantially match the first raw image 551. An image obtained through the convolution of the first PSF 570 with an actual image that substantially matches a second fingertip 562 may substantially match a second raw image 552.

With reference to FIG. 5, a high-resolution imaging system may obtain a fingerprint for the second fingertip 562, which has a narrow width between ridges. In contrast, in a low-resolution imaging system (e.g., the imaging system in FIG. 5), at least some of the fingerprint for the second fingertip 562 may not be obtained. For example, in the low-resolution imaging system in FIG. 5, the first fingertip 561 may be scanned to obtain the first raw image 551 and the second fingertip 562 may be scanned to obtain the second raw image 552. Since the first fingertip 561 has a wide width between the ridges thereof, the first raw image 551 may be obtained without loss from the first fingertip 561 even in the low-resolution imaging system. Since the second fingertip 562 has a relatively narrow width between the ridges thereof, loss may occur in obtaining the second raw image 552 from the second fingertip 562 on the low-resolution system. Therefore, when the raw image is obtained for the second fingertip 562, a relatively high-resolution imaging system may be required. The resolution of the imaging system is an attribute that is related to the reliability of user authentication. For example, the controller may process the first raw image 551 and the second raw image 552 (e.g., including background denoising and PSF deconvolution), respectively, to obtain a first fingerprint image 581 and a second fingerprint image 582. The reliability of user authentication using the first fingerprint image 581 may be lower than the reliability of user authentication using the second fingerprint image 582.

The size of the PSF may depend on the size of the light-emitting element. A minimum unit that constitutes an image may be one pixel. Therefore, a smallest unit as a light-emitting element may be one pixel. For example, in a display with 500 pixels per inch (500 PPI), a pixel may have a size (e.g., width or diameter) of about 50 µm. When one pixel emits light, the size of light (e.g., the first PSF size 531) at a place where an object is located may be about 400 to 500 µm.

The PSF size may be an attribute that is related to the resolution of the raw image. For example, as the PSF size is smaller, the resolution of the raw image may be higher. As a result, the reliability of user authentication may increase.

With reference to FIG. 6, reference numeral 631 represents a second PSF size that light 630 has on the window surface 521 where an object is located when a second light-emitting element 612 emits light. The size of the second light-emitting element 612 may be smaller than the size of the first light-emitting element 511. Accordingly, the second PSF size 631 may be shorter than the first PSF size 531. Reference numeral 670 is a second PSF 670 having the second PSF size 631. An image obtained through the convolution of the second PSF 670 with an actual image that substantially matches the first fingertip 561 may substantially match the third raw image 651 obtained by scanning the first fingertip 561. An image obtained through the convolution of the second PSF 670 with an actual image that substantially matches the second fingertip 562 may substantially match a fourth raw image 652 obtained by scanning the second fingertip 562. The controller may process the third raw image 651 and the fourth raw image 652, respectively, to obtain a third fingerprint image 681 and a fourth fingerprint image 682.

With reference to FIGS. 5 and 6, the PSF size of the first PSF 570 may be smaller than the PSF size of the second PSF 670. For example, the second PSF size 631 may be shorter than the first PSF size 531. Therefore, the resolution of the third raw image 651 may be higher than the resolution of the first raw image 551. The resolution of the fourth raw image 652 may also be relatively higher than the resolution of the second raw image 552. As a result, the reliability of user authentication using the third fingerprint image 681 and the fourth fingerprint image 682 may be higher than the reliability of user authentication using the first fingerprint image 581 and the second fingerprint image 582.

A structure may be disposed between the display and the window that induce light emitted from the light-emitting area to have straightness. When the display is operated in normal mode for wide viewing angle, the PSF size may be a first size by the structure. When an operating mode of the display is changed to a fingerprint recognition mode for user authentication, the PSF size may be a second size that is smaller than the first size by the structure.

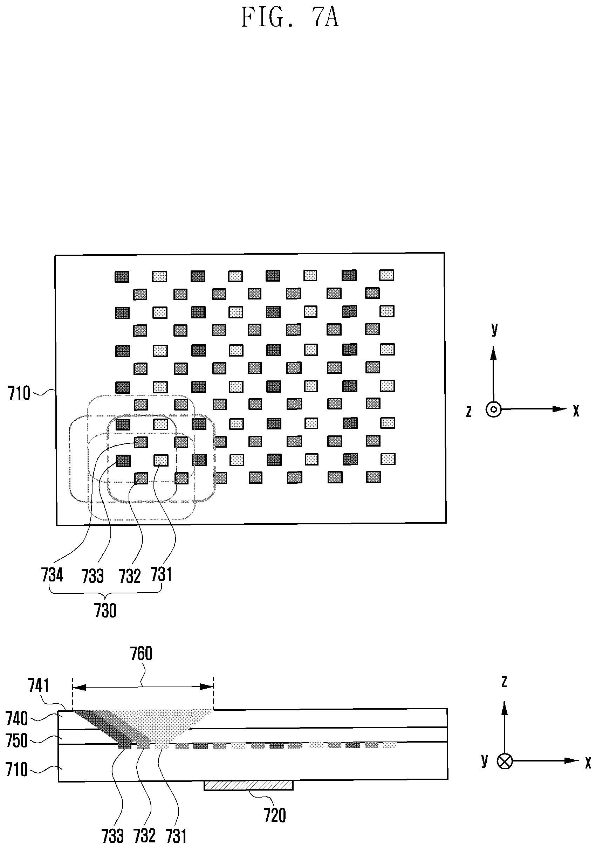

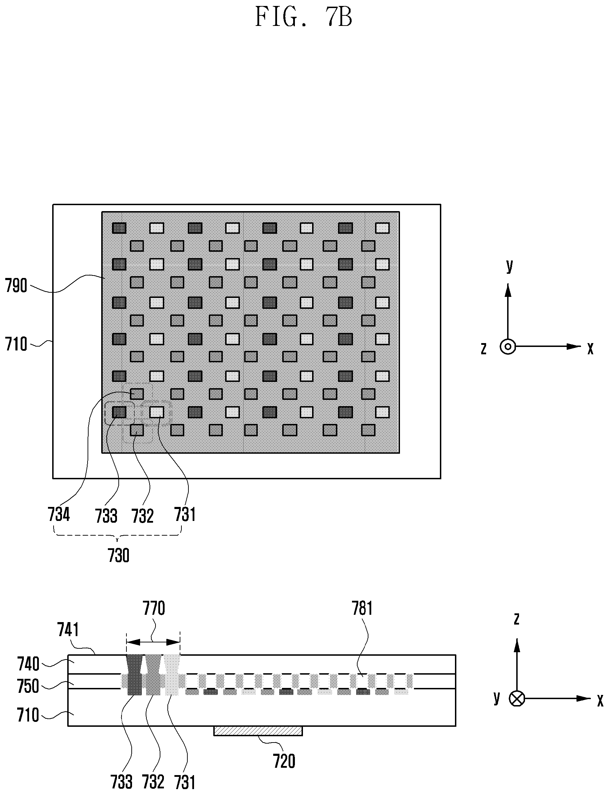

FIGS. 7A and 7B are views for describing an embodiment of implementing a normal mode and a fingerprint recognition mode using a spatial light modulator (SLM) in the electronic device.

With reference to FIGS. 7A and 7B, a partial area of the display (e.g., the display 330 in FIGS. 3A and 3B) may be designated as a light-emitting area 710 that emits light to detect a fingerprint, and a photodiode 720 may be positioned thereunder as a light-receiving sensor. The pixels may be arranged in the display in a diamond structure, as illustrated. Sub-pixels 731, 732, 733, and 734 may constitute one RGBG pixel 730. However, the technical spirits to be described in the present document are not limited by the constitution and structure of these pixels. An SLM 750 may be disposed between a window 740 and the light-emitting area 710. The SLM 750 may be attached to the entire display or only to the light-emitting area 710 that is designated to emit light for fingerprint recognition. The SLM 750 may change transmittance (amplitude) at a specific location on the plane in response to an electrical signal from the controller.

With reference to FIG. 7A, the controller may control the SLM 750 to allow light to pass through all areas of the SLM 750 when the display is operated in normal mode. With this control, the transmittance in all areas of the SLM 750 is configured to be maximized, such that the light emitted from each pixel in the light-emitting area 710 may have a first PSF size 760 on a window surface 741.

With reference to FIG. 7B, the controller may control the SLM 750 to allow light to pass through a designated first area and prevent light from passing through a second area of the entire area of the SLM 750 when the display is operated in fingerprint recognition mode. The first area may include an area 781 of the entire area of the SLM 750 that is aligned in parallel with the sub-pixels of the light-emitting area 710. The second area may include a vicinity 790 of the first area. The light emitted from each pixel of the light-emitting area 710 may have a second PSF size 770 that is smaller than the first PSF size 760 on the window surface 741 as light is transmitted through the area 781 aligned in parallel with the sub-pixels (the area disposed above the sub-pixels in the z-axis direction and aligned in parallel with the sub-pixels in the drawing) and not transmitted through the vicinity 790 of the first area.

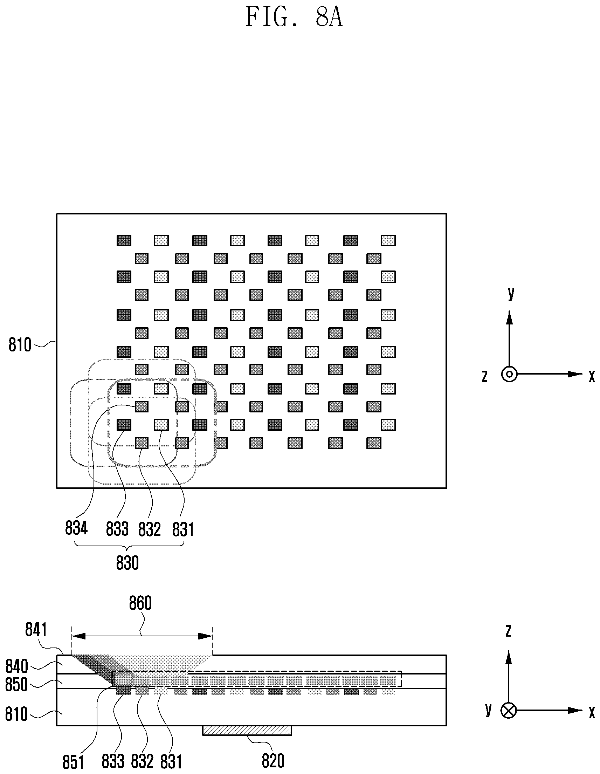

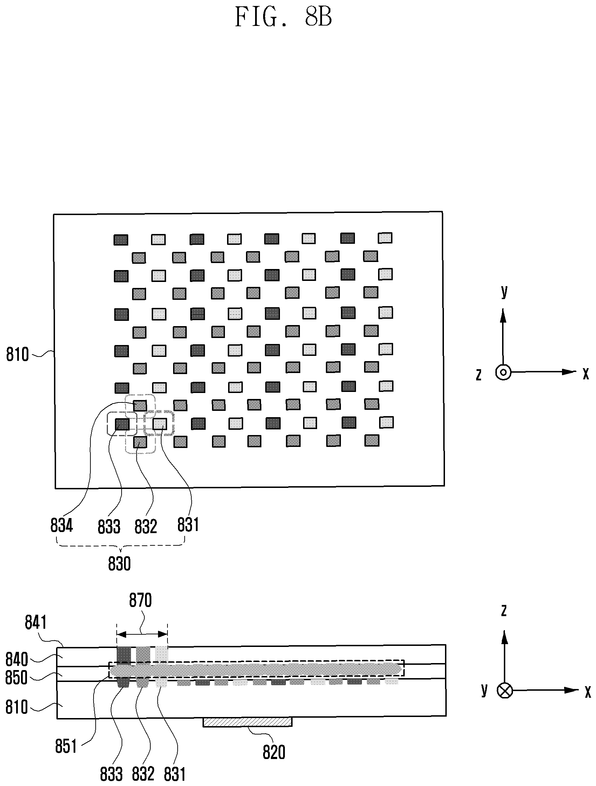

FIGS. 8A and 8B are views for describing an embodiment of implementing a normal mode and a fingerprint recognition mode using a liquid lens in the electronic device. With reference to FIGS. 7A and 7B, parts that are redundant with those described above will be omitted or briefly described.

With reference to FIGS. 8A and 8B, at least a partial area of the display (e.g., the display 330 in FIGS. 3A and 3B) may be designated as a light-emitting area 810 and a photodiode 820 may be located thereunder. Sub-pixels 831, 832, 833, and 834 may constitute one RGBG pixel 830. A lens layer 850 including liquid lenses 851, as electrical elements that induce light emitted from the light-emitting area to have straightness, may be disposed between a window 840 and the light-emitting area 810. The liquid lenses 851 may each correspond to sub-pixels in the light-emitting area 810 and may be aligned in parallel with the sub-pixels. The liquid lenses 851 in the lens layer 850 may be adjusted in interval with the sub-pixels in response to an electrical signal received from the controller. The reason the PSF size is larger than the size of the pixel is due to the dispersion property of the light emitted from the pixel, which spreads out in all directions. Therefore, when the liquid lenses 851 in the lens layer 850 are located at points (focal points) that are spaced apart from the sub-pixels (reference points) by a focal length, the light emitted from the sub-pixels may have the collimation property, thereby increasing the straightness of light. As a result, the PSF size may be reduced by the liquid lenses 851 located at the focal points.

With reference to FIG. 8A, the controller may control the lens layer 850 to allow the liquid lenses 851 to be located such that the focal length is close to infinity when the display is operated in normal mode. With this control, light has the dispersion property, so that the light emitted from each pixel of the light-emitting area 810 may spread in the x-axis and y-axis directions while traveling in the z-axis direction to have a first PSF size 860 on a window surface 841.

With reference to FIG. 8B, the controller may control the lens layer 850 such that the liquid lenses 851 are located at points (focal points) spaced apart by a focal length from the sub-pixels when the display is operated in fingerprint recognition mode. Accordingly, the light emitted from each pixel of the light-emitting area 810 may have an increased straightness in the z-axis direction to have a second PSF size 870 that is smaller than the first PSF size 860 on the window surface 841.

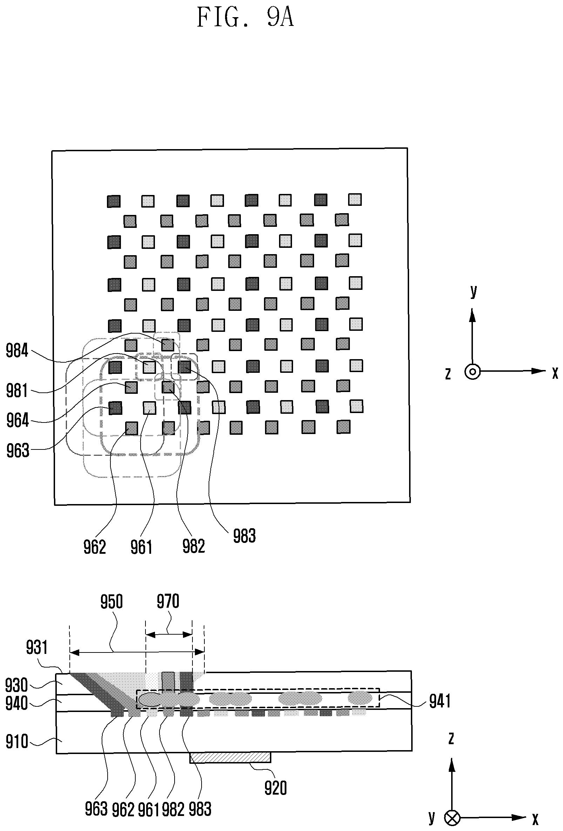

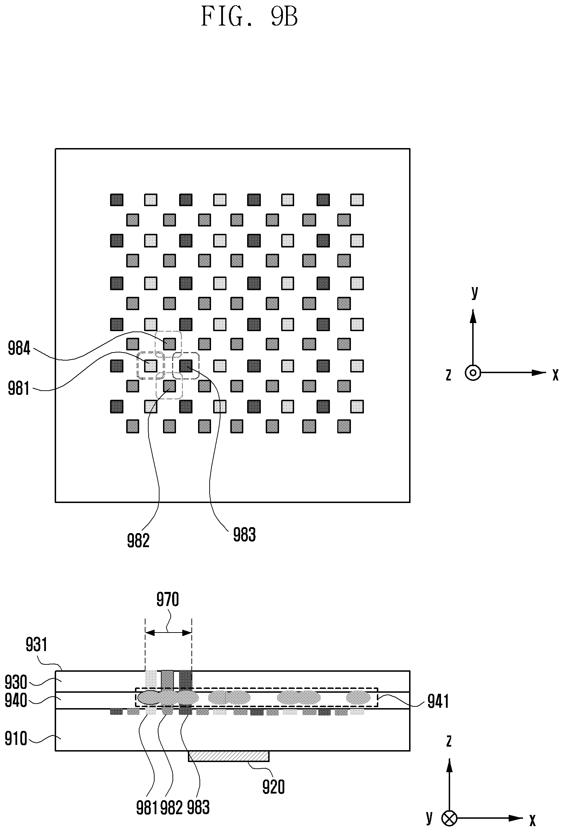

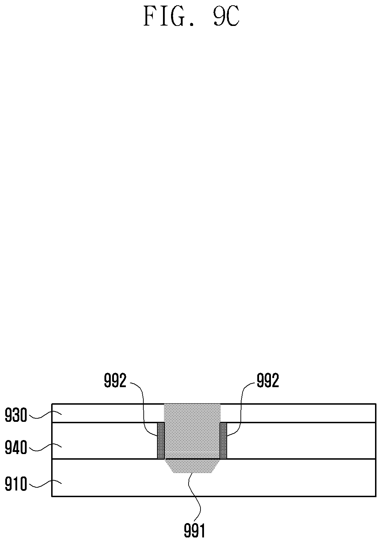

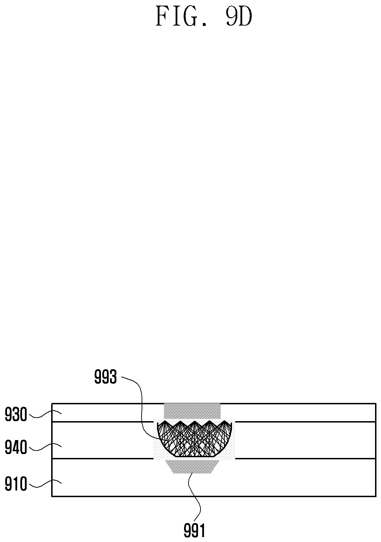

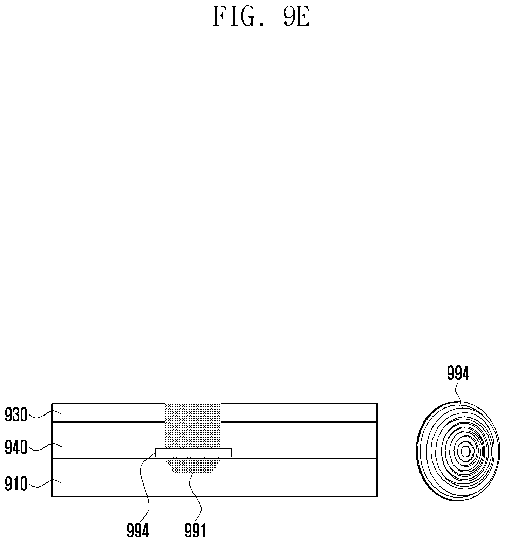

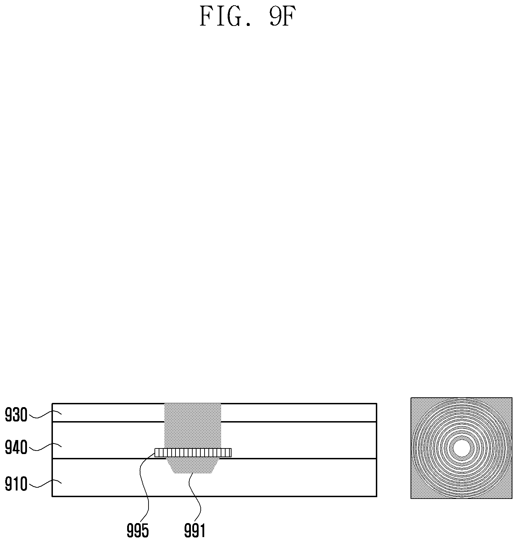

FIGS. 9A, 9B, 9C, 9D, 9E, and 9F are views for describing an embodiment of implementing a normal mode and a fingerprint recognition mode using a structure for changing a display mode in the electronic device. Parts that are redundant with those described above will be omitted or briefly described.

With reference to FIGS. 9A and 9B, a partial area of the display (e.g., the display 330 in FIGS. 3A and 3B) may be designated as a light-emitting area 910 and a photodiode 920 may be located thereunder. Sub-pixels (e.g., RGBG) may constitute one pixel in the display. The pixels may be arranged in the display in a diamond structure. The pixels may be divided into a first group of pixels for a wide viewing angle and a second group of pixels for a narrow field of view in a light-emitting area 910. A structure 940 including constituent elements 941 that induce the light emitted from the second group of pixels to have straightness may be disposed between a window 930 and the light-emitting area 910. The constituent elements 941 may each correspond to a sub-pixel within the second group of pixels and may be aligned in parallel with the sub-pixels. As illustrated, the constituent elements 941 are lenses and may be located at points (focal points) spaced apart by a focal length from the sub-pixels so that the light emitted from the second group of pixels may have straightness. A ratio of the first group of pixels to the second group of pixels may be N to 1. For example, when a high resolution for a fingerprint image is required, the ratio of the first group of pixels to the second group of pixels may be equal to one to one and may be uniformly arranged in the light-emitting area 910.

With reference to FIG. 9A, the controller may activate both the first group of pixels and the second group of pixels when the display is operated in normal mode. The light emitted from each pixel of the first group of pixels may spread in the x-axis and y-axis directions while traveling in the z-axis direction to have a first PSF size 950 on a window surface 931. For example, a first RGBG pixel 961, 962, 963, and 964 in the first group of pixels may emit light, and light having a first PSF size 950 may be located on the window surface 931 by the light emission of the first RGBG pixel 961, 962, 963, and 964. The light emitted from each pixel of the second group of pixels may have a second PSF size 970 that is smaller than the first PSF size 950 on the window surface 931 due to increased straightness in the z-axis direction. For example, a second RGBG pixel 981, 982, 983, and 984 in the second group of pixels may emit light, and light having the second PSF size 970 may be located on the window surface 931 by the light emission of the second RGBG pixel 981, 982, 983, and 984.

With reference to FIG. 9B, the controller may deactivate the first group of pixels and activate the second group of pixels when the display is operated in fingerprint recognition mode. Accordingly, the light having the second PSF size 970 may be located on the window surface 931.

In addition to the lens, various constituent elements may induce light to have straightness. With reference to FIG. 9C, an absorbing member 992 that absorbs light may be formed around an area aligned in parallel with a sub-pixel 991. With reference to FIG. 9D, a mirror 993 having a compound parabolic concentrator (CPC) shape may be formed in the structure 940 in place of the lens. The mirror 993 may have a different shape than the CPC. With reference to FIG. 9E, a relatively thin fresnel lens 994 may be substituted for a general lens. With reference to FIG. 9F, a zone plate 995 may be substituted for a general lens.

A refresh rate means the number of frames output to a screen per second. For example, a refresh rate of 60 Hz means that the number of frames that are refreshed is 60 per second. In the display, pixels are refreshed sequentially, for example, line by line on the x-axis, and a refresh direction may be in the y-axis direction, which is perpendicular to the x-axis. For example, when the refresh rate is 60Hz, it may take approximately 16.6ms to refresh all the pixels. As described above, when the pixels are refreshed with a time difference along the y-axis direction, the display may be operated in fingerprint recognition mode without taking into consideration the blocking of light smearing in the y-axis direction.

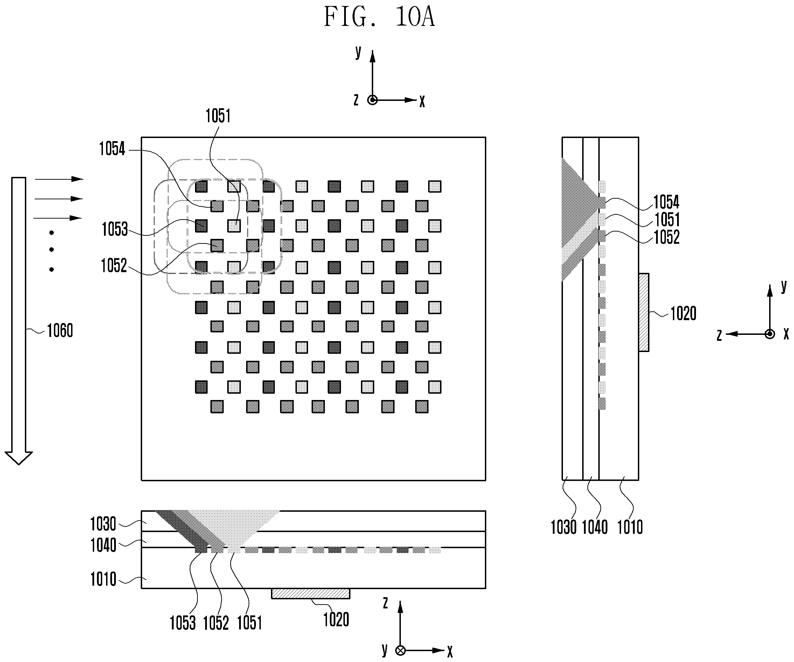

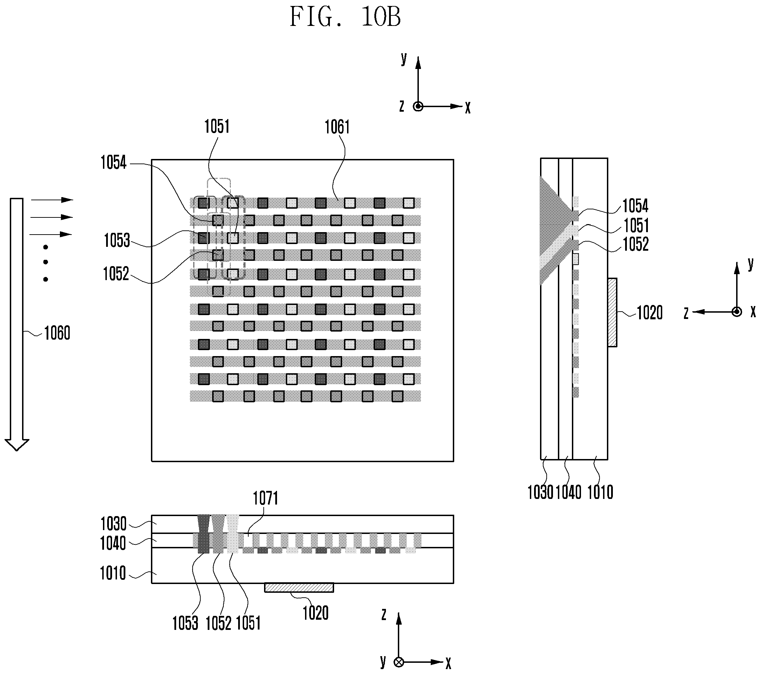

FIGS. 10A and 10B are views for describing an embodiment of implementing a normal mode and a fingerprint recognition mode in the electronic device on the basis of a refresh direction. Parts that are redundant with those described above will be omitted or briefly described.

With reference to FIGS. 10A and 10B, a partial area of the display (e.g., the display 330 in FIGS. 3A and 3B) may be designated as a light-emitting area 1010 and a photodiode 1020 may be located thereunder. Sub-pixels (e.g., RGBG) may constitute one pixel in the display. The pixels may be arranged in the display in a diamond structure. An SLM 1040 may be disposed between a window 1030 and the light-emitting area 1010.

With reference to FIG. 10A, the controller may control the SLM 1040 to allow light to pass through all areas of the SLM 1040 when the display is operated in normal mode. For example, light emitted from one RGBG pixel 1051, 1052, 1053, and 1054 may pass through the SLM 1040 and be smeared in the x-axis and y-axis directions while traveling in the z-axis direction.

With reference to FIG. 10B, the controller may control the SLM 1040 to allow light to pass through a designated first area and prevent light from passing through a second area of the entire area of the SLM 1040 when the display is operated in fingerprint recognition mode. The second area may include an area 1061 formed between sub-pixels along the x-axis direction. The first area may include an area 1071 of the entire area of the SLM 1040 that is aligned in parallel with the sub-pixels of the light-emitting area 1010. Among the areas not aligned in parallel, a remaining portion, excluding the areas formed along the x-axis direction between the sub-pixels, may be included in the first area. As described above, the light emitted from the RGBG pixel 1051, 1052, 1053, and 1054 may be smeared in the direction oblique to the y-axis and z-axis as illustrated, but the light smearing in the direction oblique to the x-axis and z-axis may be blocked.

Another structure may be located between the window 1030 and the light-emitting area 1010 instead of the SLM 1040. For example, the lens layer including lenses aligned in parallel with the sub-pixels may be disposed between the window 1030 and the light-emitting area 1010. Here, the lens may be a cylindrical lens having the property of dispersing light in a direction oblique to a first axis (y-axis) parallel to the refresh direction 1060 and a second axis (z-axis) directed toward the window 1030 and blocking light smearing in a direction oblique to a third axis (x-axis) perpendicular to the first axis and the second axis (z-axis). As another example, a structure including an absorbing member formed along the x-axis direction between the sub-pixels may be disposed between the window 1030 and the light-emitting area 1010.

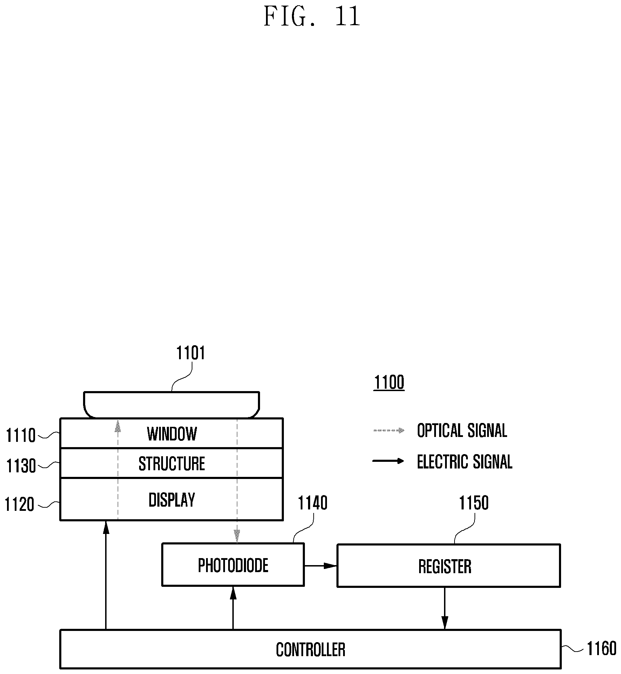

FIG. 11 is a block diagram illustrating an electronic device 1100 according to an embodiment.

The electronic device 1100 (e.g., the electronic device 101 in FIG. 1 and/or the electronic device 300 in FIGS. 3A to 3B) may include a window 1110 (e.g., the front surface cover (or window) 320 in FIG. 3A), a display 1120 (e.g., the display module 160 in FIG. 1 and/or the display 330 in FIGS. 3A to 3B), a structure 1130 structurally disposed between the window 1110 and the display 1120, a photodiode 1140 structurally disposed under the display 1120, a register 1150, and a controller 1160. The register 1150 (e.g., the memory 130 in FIG. 1) may be electrically connected to the photodiode 1140. The controller 1160 may activate the photodiode 1140 and receive optical information from the photodiode 1140 through the register 1150 when user authentication using a fingerprint is initiated. In the display 1120, an area located above the photodiode 1140 may be designated as a light-emitting area that emits light for fingerprint detection (e.g., the light-emitting area 331 in FIG. 3B). The structure 1130 may include constituent elements that induce light emitted from the light-emitting area to have straightness. For example, the structure 1130 may be one of the various structures described above with reference to FIGS. 7 to 10.

The controller 1160 (e.g., the processor 120 in FIG. 1) may recognize the occurrence of an event requiring user authentication using a fingerprint. For example, the controller 1160 may recognize, as the event, a designated screen including the UI element 370 as in FIG. 3B (e.g., an application execution screen for online transactions (commerce or financial transactions), identity verification, or screen unlocking, and the like) being displayed on the display 1120. Alternatively, the controller 1160 may recognize a user input that requires a calling of the application launch screen as the event. Alternatively, the controller 1160 may recognize, as the event, the proximity of an object to the light-emitting area in a state where the UI element is displayed in the light-emitting area.

On the basis of the occurrence of the event, the controller 1160 may change the operating mode of the display 1120 from the normal mode to the fingerprint recognition mode. For example, when the structure 1130 is configured to adjust the PSF size in response to an electrical signal received from the controller 1160 to be narrower than when the operating mode of the display 1120 is operated in normal mode (e.g., the SLM 750, the lens layer 850 including the liquid lenses 851), the controller 1160 may control the structure 1130 to increase the straightness of light in the light-emitting area. Here, the straightness of light may be considered only in the direction perpendicular to the refresh direction, as described with reference to FIG. 10B. As another example, when the structure 1130 is made up to include constituent elements that induce light to have straightness (e.g., the constituent elements described with reference to FIGS. 9A to 9F) and the pixels in the light-emitting area are divided into a first group of pixels that are not aligned with the constituent elements and a second group of pixels that are aligned in parallel with the constituent elements, the controller 1160 may control the display 1120 to deactivate the first group of pixels and activate the second group of pixels.

After changing to the fingerprint recognition mode, the controller 1160 may control the display 1120 such that the light-emitting elements in the light-emitting area emit light sequentially, as exemplified in FIG. 4. The controller 1160 may receive optical information corresponding to each light-emitting element from the photodiode 1140 through the register 1150. The controller 1160 may generate a first fingerprint image corresponding to a fingertip 1101 using the plurality of optical information received from the photodiode 1140 through the register 1150 and location information (e.g., xy coordinates) of the light-emitting element corresponding to each of the optical information. The controller 1160 may identify whether the fingerprint obtained using the photodiode 1140 is a user's fingerprint enrolled in the electronic device 1100 through a similarity comparison between the first fingerprint image and a second fingerprint image stored in a secure area (e.g., an embedded secure element (eSE)) in the memory (e.g., the memory 130 of FIG. 1). After the identification has been completed, the controller 1160 may change the operating mode of the display 1120 from the fingerprint recognition mode to the normal mode.

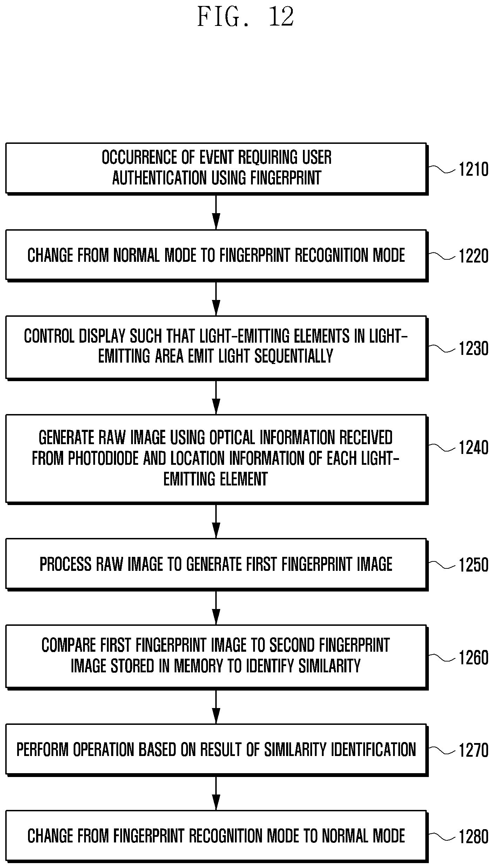

FIG. 12 is a flowchart for describing a method of authenticating a user using a fingerprint on the electronic device 1100, according to an embodiment. With reference to FIG. 11, parts that are redundant with those described above will be omitted or briefly described. The embodiment illustrated in FIG. 12 is just an illustrative example, the order of operations according to various embodiments disclosed in the present document may differ from that illustrated in FIG. 12, and some operations illustrated in FIG. 12 may be omitted, the order between operations may be changed, or operations may be merged.

At operation 1210, the controller 1160 may recognize the occurrence of an event requiring user authentication using a fingerprint.

At operation 1210, the controller 1160 may change the operating mode of the display 1120 from the normal mode to the fingerprint recognition mode in response to the occurrence of an event.

At operation 1230, the controller 1160 may control the display 1120 to allow the light-emitting elements in the light-emitting area to emit light sequentially after changing to the fingerprint recognition mode.

At operation 1240, the controller 1160 may receive optical information corresponding to each light-emitting element from the photodiode 1140 through the register 1150, and may generate a raw image using the received plurality of optical information (e.g., reflectance) and the location information corresponding to each optical information.

At operation 1250, the controller 1160 may generate the first fingerprint image by image processing the raw image (e.g., including background denoising and PSF deconvolution).

At operation 1260, the controller 1160 may compare the first fingerprint image to the second fingerprint image stored in the memory to identify a similarity (or a degree of matching). For example, the controller may determine that the fingerprint obtained using the photodiode 1140 is a fingerprint of a user enrolled in the electronic device 1100 when a matching rate between the two fingerprint images is equal to or greater than a predetermined threshold.

At operation 1270, the controller 1160 may perform an operation based on the result of the similarity identification. For example, when a mismatch is identified, the controller 1160 may display a message "fingerprint does not match" on the display 1160. When a match is identified, the controller 1120 may perform a designated operation (e.g., an online transaction (commerce or financial transaction), identity verification, or screen unlocking).

At operation 1280, the controller 1160 may change the operating mode of the display 1120 from the fingerprint recognition mode to the normal mode after the similarity is identified.

According to an embodiment, an electronic device (e.g., the electronic device 1100 in FIG. 11) may include a display (e.g., the display 1120), a window (e.g., the window 1110) covering the display, a photodiode (e.g., the photodiode 1140) disposed under a light-emitting area designated to emit light for detecting a fingerprint on the display, a processor (e.g., the controller 1160), and a structure (e.g., the structure 1130) disposed between the window and the display and induce light emitted from the light-emitting area to have straightness. The processor may be configured to control the display to allow light-emitting elements in the light-emitting area to emit light sequentially. The processor may be configured to obtain a fingerprint image on the basis of optical information corresponding to each of the light-emitting elements collected through the photodiode and location information of each of the light-emitting elements.

A unit of a light-emitting element, which the processor allows to emit light one at a time, may be one pixel.

The structure may be configured to change a point spread function (PSF) size in response to an electrical signal received from the processor. The PSF size may mean a size of light on a surface of the window, when one of the light-emitting elements emits light. The processor may control the structure such that the PSF has a first size when the display is operated in a first mode for a wide viewing angle. The processor may control the structure such that the PSF size has a second size that is smaller than the first size when the display is operated in a second mode for fingerprint recognition.

The structure may include a spatial light modulator (e.g., the SLM 750). The processor may control the spatial light modulator such that, in the first mode, an entire area of the spatial light modulator is transmissive of light. The processor may control the spatial light modulator such that, in the second mode, a first area of the entire area of the spatial light modulator is transmissive of light and a second area is not transmissive of light. The first area may include an area aligned in parallel with the light-emitting elements. The second area may include a vicinity of the first area.

The second area may include an area formed between the light-emitting elements along a second direction perpendicular to a first direction that is a refresh direction of the display. The first area may include a remaining portion, excluding an area formed between the light-emitting elements along the second direction.

The structure may include liquid lenses (e.g., the liquid lenses 851) that are aligned in parallel with the light-emitting elements and adjustable in interval with the light-emitting elements in response to an electrical signal. The processor may control the structure such that, in the first mode, the liquid lenses are located with a focal length close to infinity. The processor may control the structure such that, in the second mode, the liquid lenses are located at points spaced apart from the light-emitting elements by the focal length.

The light-emitting elements may be divided into a first group and a second group. The structure may include constituent elements that induce light emitted from the second group to have straightness. The processor may activate both the first group and the second group, when the display is operated in a first mode for a wide viewing angle. The processor may deactivate the first group and activate the second group, when the display is operated in a second mode for fingerprint recognition.

The constituent elements may include absorbing members formed around an area aligned in parallel with light-emitting elements in the second group, lenses aligned in parallel with the light-emitting elements in the second group, mirrors aligned in parallel with the light-emitting elements in the second group and having a compound parabolic concentrator (CPC) shape, or zone plates aligned in parallel with the light-emitting elements in the second group.

The lenses may be comprise cylindrical lenses having the property of dispersing light in a direction oblique to a first axis parallel to a refresh direction of the display and a second axis directed toward the window and blocking light smearing in a direction oblique to a third axis perpendicular to the first axis and the second axis.

The absorbing members may be located in an area formed between the light-emitting elements along a second direction perpendicular to a first direction that is the refresh direction of the display.

According to an embodiment, a method of operating an electronic device (e.g., the electronic device 1110) may include an operation (e.g., operation 1220) of changing an operating mode of a display provided in the electronic device from a first mode for a wide viewing angle to a second mode for fingerprint recognition in response to the occurrence of an event requiring user authentication using a fingerprint, an operation (e.g., operation 1230) of controlling the display such that light-emitting elements in a light-emitting area designated for fingerprint detection in the display sequentially emit light, and an operation (e.g., operations 1240 to 1250) of generating a raw image using optical information corresponding to each light-emitting element received from a photodiode provided in the electronic device and location information of each light-emitting element, and processing the raw image to generate a first fingerprint image. The electronic device is provided with a structure that is configured to be disposed between a window of the electronic device and the display and to change a PSF size in response to an electrical signal, in which the PSF size means a size of light on a surface of the window when one of the light-emitting elements emits light, and in which the PSF size may have a first size when the display is operated in the first mode. The operation of changing the operating mode from the first mode to the second mode may include an operation of controlling the structure such that the PSF size has a second size that is smaller than the first size.

The structure may include a spatial light modulator (e.g., the SLM 750). The method may include an operation of controlling the spatial light modulator such that, in the first mode, an entire area of the spatial light modulator is transmissive of light, and an operation of controlling the spatial light modulator such that, in the second mode, a first area of the entire area of the spatial light modulator is transmissive of light and a second area of the entire area of the spatial light modulator is not transmissive of light. The first area may include an area aligned in parallel with the light-emitting elements. The second area may include a vicinity of the first area.

The structure may include liquid lenses that are aligned in parallel with the light-emitting elements and adjustable in interval with the light-emitting elements in response to an electrical signal. The method may include an operation of controlling the structure such that, in the first mode, the liquid lenses are located with a focal length close to infinity, and an operation of controlling the structure such that, in the second mode, the liquid lenses are located at points spaced apart from the light-emitting elements by the focal length.

The method may include an operation of comparing the first fingerprint image to a second fingerprint image stored in the electronic device to identify a similarity (e.g., operation 1260), and an operation of changing an operating mode of the display from the second mode to the first mode after the identification of the similarity (e.g., operation 1280).

According to an embodiment, a method of operating an electronic device (e.g., the electronic device 1110) may include an operation (e.g., operation 1220) of changing an operating mode of a display provided in the electronic device from a first mode for a wide viewing angle to a second mode for fingerprint recognition in response to the occurrence of an event requiring user authentication using a fingerprint, an operation (e.g., operation 1230) of controlling the display such that light-emitting elements in a light-emitting area designated in the display sequentially emit light, and an operation (e.g., operations 1240 to 1250) of generating a raw image using optical information corresponding to each light-emitting element received from a photodiode provided in the electronic device and location information of each light-emitting element, and processing the raw image to generate a first fingerprint image. The light-emitting elements are divided into a first group and a second group, and the electronic device may be provided with a structure including constituent elements disposed between a window of the electronic device and the display and inducing light emitted from the second group to have straightness. The operation of changing the operating mode from the first mode to the second mode may include an operation of deactivating the first group and activating the second group.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The embodiments of the disclosure described and shown in the specification and the drawings have presented specific examples in order to easily explain the technical contents of embodiments of the disclosure and help understanding of embodiments of the disclosure, and are not intended to limit the scope of embodiments of the disclosure. Therefore, the scope of various embodiments of the disclosure should be construed to include, in addition to the embodiments disclosed herein, all changes and modifications that are derived on the basis of the technical idea of various embodiments of the disclosure.

## Claims

1. An electronic device comprising:
a display;
a window covering the display;
a photodiode disposed under a light-emitting area designated to emit light to detect a fingerprint on the display;
a processor; and
a structure disposed between the window and the display and configured to induce light emitted from the light-emitting area to have straightness,
wherein the processor is configured to control the display to allow light-emitting elements in the light-emitting area to emit light sequentially and obtain a fingerprint image on the basis of optical information corresponding to each of the light-emitting elements collected through the photodiode and location information of each light-emitting element.

2. The electronic device of claim 1, wherein a unit of a light-emitting element, which the processor allows to emit light one at a time, is one pixel.

3. The electronic device of claim 1, wherein the structure is configured to change a point spread function (PSF) size in response to an electrical signal received from the processor,
wherein the PSF size means a size of light on a surface of the window when one of the light-emitting elements emits light, and
wherein the processor is configured to control the structure such that, the PSF size has a first size when the display is operated in a first mode for a wide viewing angle and the PSF size has a second size that is smaller than the first size when the display is operated in a second mode for fingerprint recognition.

4. The electronic device of claim 3, wherein the structure includes a spatial light modulator,
wherein the processor is configured to control the spatial light modulator such that, in the first mode, an entire area of the spatial light modulator is transmissive of light, and such that, in the second mode, a first area of the entire area of the spatial light modulator is transmissive of light and a second area of the entire area of the spatial light modulator is not transmissive of light, and
wherein the first area includes an area aligned in parallel with the light-emitting elements, and the second area includes a vicinity of the first area.

5. The electronic device of claim 4, wherein the second area includes an area formed between the light-emitting elements along a second direction perpendicular to a first direction that is a refresh direction of the display, and
wherein the first area includes a remaining portion, excluding an area formed between the light-emitting elements along the second direction.

6. The electronic device of claim 3, wherein the structure includes liquid lenses that are aligned in parallel with the light-emitting elements and adjustable in interval with the light-emitting elements in response to an electrical signal, and
wherein the processor is configured to control the structure such that, in the first mode, the liquid lenses are located with a focal length close to infinity and, in the second mode, the liquid lenses are located at points spaced apart from the light-emitting elements by the focal length.

7. The electronic device of any one of claims 1 to 6, wherein the light-emitting elements are divided into a first group and a second group and the structure includes constituent elements that induce light emitted from the second group to have straightness, and
wherein the processor is configured to activate both the first group and the second group when the display is operated in a first mode for a wide viewing angle, and to deactivate the first group and activate the second group when the display is operated in a second mode for fingerprint recognition.

8. The electronic device of claim 7, wherein the constituent elements include absorbing members formed around an area aligned in parallel with light-emitting elements in the second group, lenses aligned in parallel with the light-emitting elements in the second group, mirrors aligned in parallel with the light-emitting elements in the second group and having a compound parabolic concentrator (CPC) shape, or zone plates aligned in parallel with the light-emitting elements in the second group.

9. The electronic device of claim 8, wherein the lenses comprises cylindrical lenses having the property of dispersing light in a direction oblique to a first axis parallel to a refresh direction of the display and a second axis directed toward the window and blocking light smearing in a direction oblique to a third axis perpendicular to the first axis and the second axis.

10. The electronic device of claim 8, wherein the absorbing members is located in an area formed between the light-emitting elements along a second direction perpendicular to a first direction that is the refresh direction of the display.

11. A method for operating an electronic device, the method comprising:
changing an operating mode of a display provided in the electronic device from a first mode for a wide viewing angle to a second mode for fingerprint recognition in response to the occurrence of an event requiring user authentication using a fingerprint;
controlling the display such that light-emitting elements in a light-emitting area designated for fingerprint detection in the display sequentially emit light; and
generating a raw image using optical information corresponding to each light-emitting element received from a photodiode provided in the electronic device and location information of each light-emitting element, and processing the raw image to generate a first fingerprint image,
wherein the electronic device is provided with a structure disposed between a window of the electronic device and the display and configured to change a PSF size in response to an electrical signal,
wherein the PSF size means a size of light on a surface of the window when one of the light-emitting elements emits light,
wherein the PSF size has a first size when the display is operated in the first mode, and
wherein the changing of the operating mode from the first mode to the second mode includes controlling the structure such that the PSF size has a second size smaller than the first size.

12. The method of claim 11, wherein the structure includes a spatial light modulator,
wherein the method comprises:
controlling the spatial light modulator such that, in the first mode, an entire area of the spatial light modulator is transmissive of light; and
controlling the spatial light modulator such that, in the second mode, a first area of the entire area of the spatial light modulator is transmissive of light and a second area of the entire area of the spatial light modulator is not transmissive of light, and
wherein the first area includes an area aligned in parallel with the light-emitting elements, and the second area includes a vicinity of the first area.

13. The method of claim 11, wherein the structure includes liquid lenses that are aligned in parallel with the light-emitting elements and adjustable in interval with the light-emitting elements in response to an electrical signal, and
wherein the method comprises:
controlling the structure such that, in the first mode, the liquid lenses are located with a focal length close to infinity; and
controlling the structure such that, in the second mode, the liquid lenses are located at points spaced apart from the light-emitting elements by the focal length.

14. The method of any one of claims 11 to 13, further comprising:
comparing the first fingerprint image to a second fingerprint image stored in the electronic device to identify a similarity; and
changing an operating mode of the display from the second mode to the first mode after the identification of the similarity.

15. A method for operating an electronic device, the method comprising:
changing an operating mode of a display provided in the electronic device from a first mode for a wide viewing angle to a second mode for fingerprint recognition in response to the occurrence of an event requiring user authentication using a fingerprint;
controlling the display such that light-emitting elements in a light-emitting area designated in the display sequentially emit light; and
generating a raw image using optical information corresponding to each light-emitting element received from a photodiode provided in the electronic device and location information of each light-emitting element, and processing the raw image to generate a first fingerprint image,
wherein the light-emitting elements are divided into a first group and a second group, and the electronic device is provided with a structure including constituent elements disposed between a window of the electronic device and the display and inducing light emitted from the second group to have straightness, and
wherein the changing of the operating mode from the first mode to the second mode includes deactivating the first group and activating the second group.
